# EUROPÄISCHE PATENTSCHRIFT

(11) **EP 3 281 259 B1**
(45) Veröffentlichungstag und Bekanntmachung des Hinweises auf die Patenterteilung: **26.06.2019**
(21) Anmeldenummer: 16717130.5
(22) Anmeldetag: 15.04.2016
(51) Int. Cl.: H01R 39/41, H02K 9/28, H01R 39/58

(54) **KONTAKTIERENDE DREHÜBERTRAGUNG ZUR ÜBERTRAGUNG VON ELEKTRISCHER ENERGIE**
CONTACT-MAKING ROTARY TRANSMISSION FOR TRANSMITTING ELECTRICAL ENERGY
TRANSMISSION ROTATIVE DE CONTACT PERMETTANT DE TRANSMETTRE DE L'ÉNERGIE ÉLECTRIQUE

(30) Priorität: 29.05.2015 EP 15169934
(43) Veröffentlichungstag der Anmeldung: 14.02.2018
(73) Patentinhaber: Siemens Aktiengesellschaft, 80333 München (DE)
(72) Erfinder: MAIER, Josef, 4775 Taufkirchen a.d. Pram (AT); BINDER, Herbert, 94127 Neuburg (DE); GRUBER, Robert, 94099 Ruhstorf (DE); KROMPASS, Martin, 94036 Passau (DE); MEMMINGER, Oliver, 94127 Neuburg a. Inn (DE); SCHIFFERER, Klaus, 94127 Neuburg am Inn (DE)
(86) Internationale Anmeldenummer: PCT/EP2016/058351
(87) Internationale Veröffentlichungsnummer: WO 2016/192883

(56) Entgegenhaltungen:
- EP-A1- 2 835 890
- DE-A1- 1 946 775
- DE-A1- 10 133 767
- DE-A1- 19 522 329
- US-A1- 2014 021 824

## Beschreibung

Die Erfindung betrifft eine Anordnung zur Führung und/oder Halterung von elektrisch leitfähigen Schleifkontaktelementen, eine kontaktierende Drehübertragung mit einer derartigen Anordnung als auch eine dynamoelektrische Maschine mit einer kontaktierenden Drehübertragung.

Bei dynamoelektrischen Maschinen, beispielsweise Generatoren oder Antriebsmotoren, kann ein Strom einem Läufer der dynamoelektrischen Maschine über eine Schleifringeinheit entnommen bzw. zugeführt werden. Bei größeren dynamoelektrischen Maschinen, wie Generatoren von Windkraftanlagen, werden nunmehr durch Kosten- und Bauraumoptimierung dieser Windkraftanlagen Generatoren und deren Komponenten immer kompakter ausgestaltet. Dies führt dazu, dass bei gleichbleibender Baugröße die Schleifringeinheit, also einzelne Komponenten der Schleifringeinheit, mit immer höheren Strömen belastet werden. Aus diesem Grund steigen dort die Temperaturen, insbesondere an den leitfähigen Schleifkontaktelementen, also den Schleifringbürsten und deren Haltern, also den Bürstenhaltern, erheblich an.

Außerdem wird die Kontaktbahn der Schleifringoberfläche, bei ansteigenden Leistungen aus Kostengründen nicht vergrößert, was zu einer weiteren Erwärmung u.a. der Schleifringbürste führt. Die zunehmende thermische Belastung dieser Komponenten führt somit dazu, dass auch die Temperaturen der gesamten Schleifringeinheit auf einen kritischen Temperaturwert ansteigt und somit Schäden an Schleifringen, an den Schleifringbürsten und letztlich an der gesamten Anlage entstehen können.

Des Weiteren werden ab einer gewissen Baugröße und Leistung dynamoelektrischer Maschinen Schleifringkörper mit größeren Außendurchmessern eingesetzt. Entsprechend größer wird dadurch auch die verwendete Halteeinheit der leitfähigen Schleifkontaktelemente. So werden zwar hohe Temperaturen vermieden, da u.a. die Arbeitsfläche des Schleifringkörpers wesentlich vergrößert ist. Das gesamte Bauvolumen wird dadurch aber ebenfalls dementsprechend vergrößert.

Dies führt letztendlich dazu, dass nunmehr aufgrund der großzügigeren Dimensionierung der einzelnen Komponenten ein höherer Materialaufwand und Materialkosten entstehen und zum anderen die Außenabmessungen eines Generators ebenfalls in unzulässiger Weise ansteigen.

Eine bekannte Stromübertragungsanordnung über elektrische Maschinen ist aus der DE 100 03 900 A1 bekannt, wobei dort um eine ausreichende Kühlung zu erhalten Schleifringe von Tragringen ausgehen, die axial hintereinander und gegeneinander elektrisch isoliert und luftumspült angeordnet sind.

Schleifringanordnungen sind auch aus der DE 32 30 298 A1, der DE 103 19 248 A1 und der US 4 329 611 A bekannt.

Aus der DE 195 22 329 A1 ist eine Bürstenhalterung für einen Elektromotor bekannt, die einen einstückig aus Kunststoff geformten Rahmen aufweist, an dem einstückig mindestens zwei Führungsschächte angeformt sind, in denen je eine Kohlebürste ohne metallische Führungshülse geführt ist. Führungsrippen an den Innenwänden des Führungsschachtes und Lüftungsöffnungen in den Wänden des Führungsschachtes sorgen für eine gute Belüftung der Kohlebürste und verhindern deren Verstaubung.

Nachteilig dabei ist, dass besonders Einzelkomponenten der bekannten Schleifringanordnungen vergleichsweise schnell thermisch überlastet werden.

Ausgehend davon liegt der Erfindung die Aufgabe zugrunde, eine kontaktierende Drehübertragung, insbesondere eine Schleifringanordnung zu schaffen, die einen vergleichsweise kompakten Aufbau aufweist und eine ausreichende Kühlung ihrer Einzelkomponenten, z.B. der elektrisch leitfähigen Schleifringkontaktelementen gewährleistet.

Die Lösung der gestellten Aufgabe gelingt durch eine Merkmalskombination gemäß Anspruch 1.

Ebenfalls gelingt die Lösung der gestellten Aufgabe durch eine dynamoelektrische Maschine mit zumindest einer derartigen kontaktierenden Drehübertragung, insbesondere Schleifringeinheit, wobei ein axialer und/oder radialer Kühlluftstrom im Bauraum der kontaktierenden Drehübertragung vorgesehen ist, der u.a. die Schleifkontaktelemente kühlt.

Mit der erfindungsgemäßen Anordnung zur Führung und/oder Halterung von Bürsten als elektrisch leitfähigen Schleifkontaktelementen ist eine ausreichende Kühlung dieser Schleifringkontaktelemente im Betrieb einer dynamoelektrischen Maschine gewährleistet. Die Aufnahmeschächte in denen sich die Schleifringkontaktelemente jeweils befinden, werden durch Wandungen gebildet, wobei zumindest eine Wandung eines Aufnahmeschachtes zumindest eine Öffnung aufweist, um das im Aufnahmeschacht befindliche Schleifringkontaktelement zu kühlen. Damit wird nunmehr die kontaktierende Drehübertragung, die mehrere derartige Aufnahmeschächte aufweist, einem axialen und/oder radialen Kühlluftstrom oder einer Konvektion ausgesetzt, der bzw. die somit u.a. die Schleifringkontaktelemente, insbesondere über diese Öffnungen der jeweiligen Aufnahmeschächte kühlt.

Eine Bürste ist dabei ein Schleifringkontaktelement, das über einen Gleitkontakt einen elektrischen Kontakt zu einem rotierenden Teil herstellt, und somit zumindest einen Teil einer Schleifringeinheit bildet. Diese Bürsten weisen beispielsweise Graphit und ggf. ergänzend metallische Komponenten auf. Die Schleifringeinheit weist insbesondere für größere zu übertragende Erregerleistungen eine oder mehrere der folgenden Komponenten wie Meldeeinrichtungen, wie z.B. eine Verschleißüberwachung der Bürsten, eine Temperaturüberwachung, Bürstenabhebevorrichtungen für eine oder mehrere Bürsten, einen von der dynamoelektrischen Maschine unabhängigen bzw. getrennten Kühlkreislauf auf.

Durch die erfindungsgemäße Anordnung zur Führung und/oder Halterung von Bürsten als elektrisch leitfähigen Schleifkontaktelementen werden die Temperaturen der einzelnen Komponenten, besonders der Bürsten, deutlich reduziert. Dies führt zu kleineren Baugrößen der gesamten kontaktierenden Drehübertragung, also der Schleifringeinheit und der daran angrenzenden Komponenten.

Außerdem kann nunmehr die kontaktierende Drehübertragung mit vergleichsweise mehr Bürsten pro Phase betrieben werden, was ohne ausreichende Kühlung nur sehr schwer möglich ist.

Es sind somit auch weitere und höhere Leistungsstufen dieser gesamten kontaktierenden Drehübertragung und somit der gesamten dynamoelektrischen Maschine möglich, ohne das Bauvolumen insbesondere der Schleifringeinheit zu vergrößern. Dies ist vor allem in Gondeln von Windkraftanlagen vorteilhaft, da die Windkraftgeneratoren mit einer erfindungsgemäßen ausgestatteten Schleifringeinheit sehr kompakt ausgeführt werden kann. Außerdem ist eine zusätzliche Kühlung, eine Fremdbelüftung dieser kontaktierenden Drehübertragung nicht zwangsläufig notwendig, sondern der durch einen vorhandenen Lüfter auf der verlängerten Welle in der kontaktierenden Drehübertragung vorhandene Volumenstrom reicht zur Kühlung der Komponenten, insbesondere der Schleifringkontaktelemente der kontaktierenden Drehübertragung aus.

In vorteilhafter Weise weisen die Aufnahmeschächte an zumindest zwei gegenüberliegenden Ecken - bei einem im Wesentlichen rechteckigen Querschnitt des Aufnahmeschachtes - Führungselemente auf, die direkt an den Wandungen bzw. Holmen eines Haltgerüstes anliegen. Die Schleifringkontaktelemente weisen letztendlich zu den vorhandenen Wandungen außerhalb dieser Führungselemente also zwischen Schleifringkontaktelement und Wandung einen Abstand bzw. Spalt auf, der u.a. auch zur Kühlung beiträgt. Durch die Führungselemente wird u.a. ein Verkanten der Schleifringkontaktelemente bei Bewegungen innerhalb des Aufnahmeschachtes an Öffnungen der Wandungen vermieden.

Das Schleifringkontaktelement, also die Bürste wird somit im Aufnahmeschacht durch Auflage bzw. Anlage an den Führungselementen sauber und exakt geführt und kann somit über die restliche Fläche des Schleifringkontaktelements als auch des offenen Schachtes im Bereich der Wandungen bzw. zwischen den Holmen außerhalb der Führungselemente über einen Kühlluftstrom gekühlt werden.

Die kontaktierende Drehübertragung saugt für ihre gesamte Einheit nunmehr Kühlluft über eigene Kühlluftöffnungen an ihrem Gehäuse an und aufgrund der nunmehr erfindungsgemäß ausgebildeten Aufnahmeschächte der Schleifkontaktelemente, also der Anordnung zur Führung und/oder Halterung der elektrisch leitfähigen Schleifkontaktelementen, also der Bürsten, ist nunmehr auch eine gezielte Kühlluftführung direkt an die Schleifkontaktelemente, also die Bürsten möglich und effektiv. Dies ist besonders vorteilhaft, da dort die kritischen Temperaturen aufgrund der Stromübertragung des Schleifkontaktelementes auf die Kontaktbahn des rotierenden Teils des Schleifringkörpers herrschen. Deshalb ist es sinnvoll diese Öffnungen aus Gründen der Kühleffizienz besonders an den großflächigen Wandungen der Aufnahmeschächte vorzusehen.

Die Oberflächen dieser Schleifkontaktelemente, also der Bürsten sind nunmehr also direkt einem Kühlluftstrom ausgesetzt. Durch die Kühlung sind nunmehr die verlaufenden Kontaktbahnen auf der Schleifringoberfläche als auch die Bürstentemperaturen, die aufgrund des Stromflusses als besonders kritisch anzusehen sind, in einem betriebsgerechten Temperaturbereich und der Betrieb der kontaktierenden Drehübertragung als auch der dynamoelektrischen Maschine ist dadurch gewährleistet.

Erfindungsgemäß sind also nunmehr vergleichsweise kleinere günstigere Bauteile zu verwenden und es kann gleichzeitig ein problemloser Betrieb des Generators und damit der Windkraftanlage gewährleistet werden.

Die Erfindung sowie weitere vorteilhafte Ausgestaltungen der Erfindung werden anhand der folgenden Ausführungsbeispiele näher beschrieben; darin zeigen:
- FIG 1: einen prinzipiellen Längsschnitt einer dynamoelektrischen Maschine,

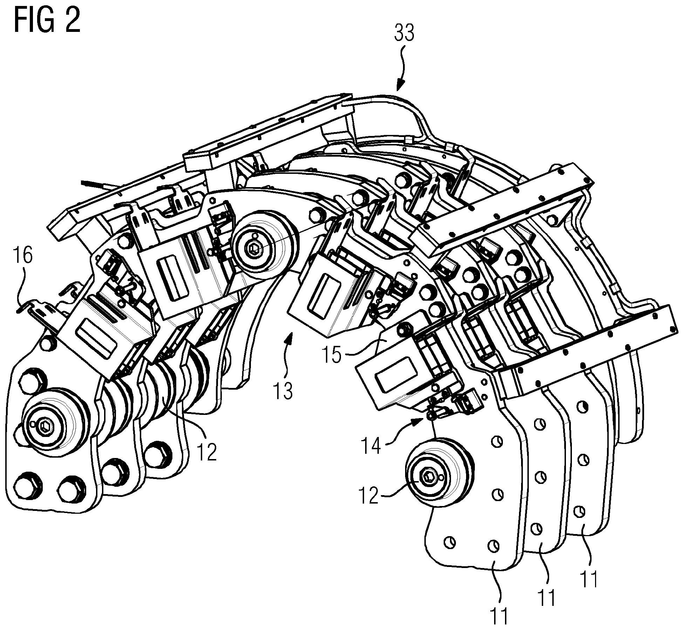

- FIG 2: ein Trägersegment eines Schleifringsystems,
- FIG 3 bis 10: Bürstenaufnahmen mit unterschiedlichen Ausführungselementen.

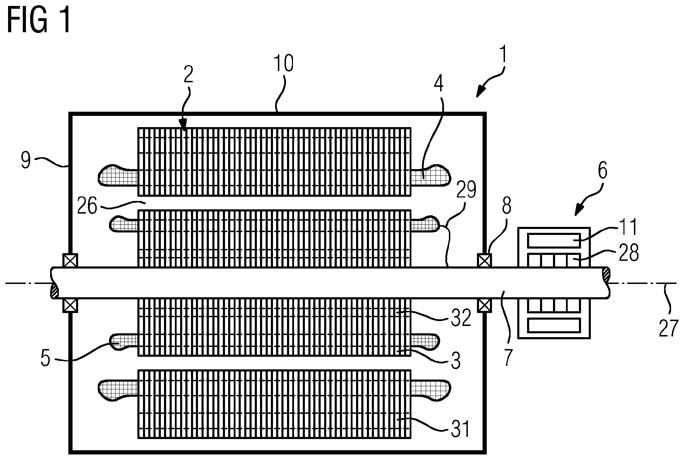

FIG 1 zeigt in einen prinzipiellen Längsschnitt eine dynamoelektrische Maschine 1, die in einem Gehäuse 10 angeordnet ist. In dem Gehäuse 10 befindet sich ein geblecht ausgeführter Stator 2, der im Betrieb über einen Luftspalt 26 durch elektromagnetische Wechselwirkung mit dem Rotor 3 eine Drehung einer Welle 7 um eine Achse 27 herbeiführt. Der ebenfalls geblecht ausgeführte Rotor 3 ist mit der Welle 7 drehfest verbunden. Das Gehäuse 10 ist über Lagerschilde 9 und Lager 8 auf der Welle 7 abgestützt. Das Wicklungssystem 4 des Stators 2 weist an den Stirnseiten des Stators 2 Wickelköpfe auf. Im Stator 2 und/oder Rotor 3 sind im Wesentlichen axial verlaufende Kühlkanäle vorgesehen.

Ebenfalls weist der Rotor 3 an seinen Stirnseiten Wickelköpfe seines Wickelsystems 5 auf, das mit einer Schleifringeinheit 6 über dementsprechende Drähte/Leiter 29 elektrisch leitend in Verbindung steht. Über die Schleifringeinheit 6 wird das Wicklungssystem 5 des Rotors 3 bestromt. Die Schleifringeinheit 6 besteht im Wesentlichen aus einem Trägersystem, das aus Trägersegmenten 11 aufgebaut ist, und Kontaktbahnen 28, die mit dem Wicklungssystem 5 des Rotors 3 elektrisch leitend in Verbindung stehen. Die zu einer Phase des Wicklungssystems 5 des Rotors 3 zugewiesenen Kontaktbahnen 28, sind dabei über elektrische Leiter 29 mit dem entsprechenden Abschnitt des Wicklungssystems 5 des Rotors 3 verbunden. Diese elektrischen Leiter 29 verlaufen dabei in Ausnehmungen der Welle 7 oder parallel zur Achse 27 an der Oberfläche der Welle 7.

Die Kontaktbahnen 28 sind dabei von geerdeten Bauteilen der Schleifringeinheit 6, als auch voneinander isolierend angeordnet.

Alternativ dazu ist die Schleifringeinheit 6 axial näher also unmittelbar am Rotor 3 angeordnet, wobei dabei dann die Lager 8 mit ihrem Lagerschild 9 zusätzlich weiter rechts anzuordnen sind. Das Gehäuse 9 der dynamoelektrischen Maschine 1 umfasst dann ebenfalls die Schleifringeinheit 6.

Die Schleifringeinheit 6 weist mehrere axial hintereinander angeordnete Trägersegmente 11 innerhalb dieser Schleifringeinheit 6 auf. Jedes Trägersegment 11 weist eine oder mehrere Bürstenaufnahmen 13 auf. Jede Bürstenaufnahme 13 hat einen oder mehrere Aufnahmeschächte 25.

Die einzelnen Trägersegmente 11 sind insbesondere bei horizontaler Ausrichtung der Achse 27 oberhalb der Welle 7 angeordnet, um allein durch die Gewichtskraft der Bürsten 22 einen gewissen Kontaktdruck auf den Kontaktbahnen 28 zu erhalten. Die Trägersegmente 11 sind in axialer Richtung durch Abstandshalter 12 voneinander beabstandet, die gleichzeitig die Trägersegmente 11 voneinander elektrisch isolieren. Durch die zwischen den Trägersegmenten 11 verbleibenden Zwischenräumen ist Kühlluft durchführbar.

Neben den Trägersegmenten 11 für die Leistungszuführung eines Dreiphasensystems sind optional auch weitere Trägersegmente 11 vorhanden, die z.B. zur Erdung der Welle 7 vorgesehen oder zur Übertragung von Meldesignalen, wie z.B. Temperaturen aus oder zum Rotor 3 vorgesehen sind.

Elektrische Zuführungen 33 zu den einzelnen Bürstenaufnahmen 13 sind in dieser Darstellung nur beispielshaft dargestellt.

An den Bürstenaufnahmen 13 sind Verschleißüberwachungen 14 als auch ein Federstempel 16 vorgesehen, die im weiteren Verlauf noch näher beschrieben und dargestellt werden.

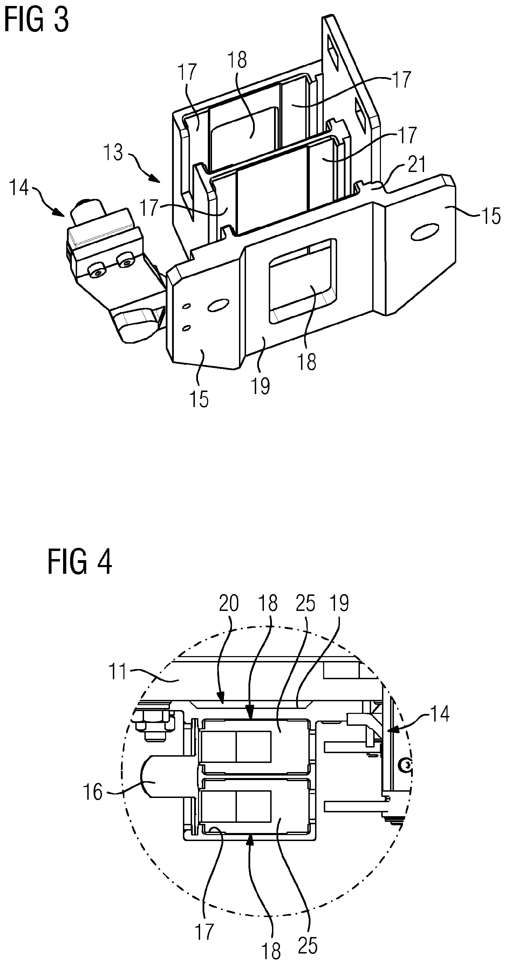

FIG 3 zeigt in perspektivischer Darstellung eine Bürstenaufnahme 3 mit zwei Aufnahmeschächten 25, in die Bürsten 22 eingesetzt werden und im Betrieb im Wesentlichen senkrecht zur Achse 27 auf den Kontaktbahnen 28 aufliegen. Die Aufnahmeschächte 25 weisen im Wesentlichen einen rechteckförmigen Querschnitt auf, und sind insofern durch jeweils vier Wandungen begrenzt. Im vorliegenden Ausführungsbeispiel weist die Bürstenaufnahme 13 zwei benachbarte Schächte mit einer gemeinsamen Wandung 19 auf, wobei zwei außenliegende Wandungen dieser Bürstenaufnahme 13 vorgesehene Öffnungen 18 aufweisen. Aufgrund dieser Öffnung 18 wird es nunmehr einer in der Schleifringeinheit 6 zirkulierenden Kühlluft ermöglicht die jeweiligen Bürsten 22 in ihrem Aufnahmeschacht 25 zu kühlen.

Die Verschleißüberwachung 14 greift an Schmalseiten des jeweiligen Aufnahmeschachtes 25 über Nuten 23 in diese Aufnahmeschächte 25 ein und meldet je nach Verschleiß der Bürste 22 einer übergeordneten Meldestelle direkt an der Maschine und/oder in einer Warte, z.B. dass und ggf. wann ein Kohlebürstenwechsel stattzufinden hat.

FIG 4 zeigt in einer Draufsicht auf die Bürstenaufnahme 13 die Aufnahmeschächte 25 als auch die Verschleißüberwachung 14 ebenso wie einen Federstempel 16. Der Federstempel 16 bewirkt eine radiale Kraft auf die, in diesem Fall nicht dargestellten Bürsten 22, und übt somit einen Druck auf die Bürsten 22 aus, der für einen entsprechende Kontaktdruck und damit eine ausreichende elektrische Kontaktierung der Bürste 22 auf der jeweiligen Kontaktbahn 28 bewirkt.

Um nunmehr neben den Öffnungen 18 in den Wandungen 19 eine Kühlung zu erhalten, ist insbesondere auf der Seite der Bürstenaufnahme 13 die dem Trägersegment 11 zugewandt ist, ein Spalt 20 zwischen Trägersegment 11 und der Bürstenaufnahme 13 vorgesehen, die es insbesondere einem radialen Kühlluftstrom innerhalb der Schleifringeinheit 6 ermöglicht, ebenfalls über die Öffnung 18 die Bürste 22 zu kühlen. Die Kühlung der Schleifringkontakte, also der Bürsten 22 wird mittels des durchgehenden Spaltes 20 entlang der Wandung 19 und eines eben verlaufenden Teils der kontaktierenden Drehübertragung, insbesondere des Trägersegments 11 zusätzlich verbessert.

Bei Betrachtung des gesamten Schleifringkörpers 6 und dessen Trägersegmenten 11 ist der Spalt 20 im wesentlichen radial angeordnet und kann somit von einem radialen Kühlluftstrom innerhalb der Schleifringeinheit 6 durchströmt werden.

Der Aufnahmeschacht der Bürste 22 wird um eine leichtgängige radiale Beweglichkeit dieser Bürste zu erhalten, mit Führungselemente 17 versehen, die in dieser Ausführung als Eckprofile ausgeführt sind. Diese Eckprofile ermöglichen, dass die Bürste 22 nunmehr über diesen vergleichsweise geringen Wandkontakt geführt wird. Damit bilden sich Bürste 22 und den Wandungen 19 ebenfalls Abstände aus, in die Kohlestaub abgeführt und/oder Kühlluft dringen kann und somit zum ordnungsgemäßen Betrieb der Maschine beiträgt.

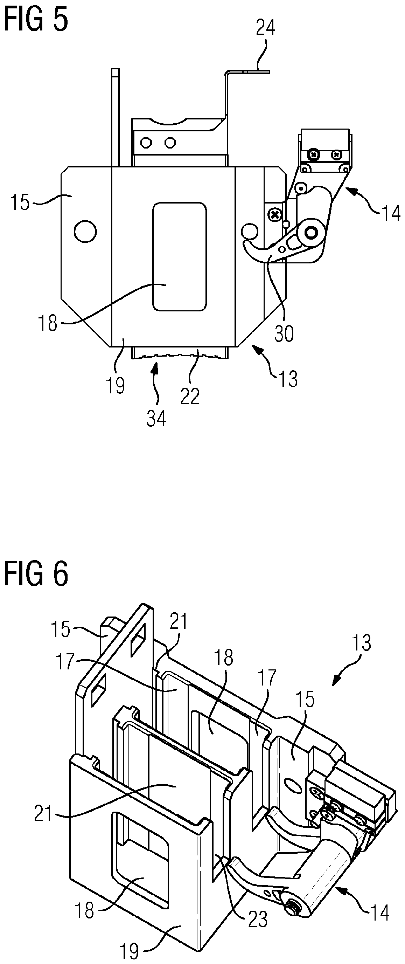

FIG 5 zeigt in einer Seitenansicht die Bürstenaufnahme 13 mit der Verschleißüberwachung 14, die mehrere Elemente aufweist. Eine Meldelasche 24, die direkt an der Bürste 22 befestigt ist, drückt an ein hakenförmiges Element 30 der Verschleißüberwachung 14 und setzt somit eine Meldung über Mikroschalter ab.

Über Laschen 15, die direkt an der Bürstenaufnahme 13 angegossen sind, wird die Bürstenaufnahme 13 an dem Trägersegment 11 befestigt. Je nach Ausprägung des Trägersegments 11 können dabei die Laschen 15 unterschiedlich räumlich ausgerichtet sein.

Die Auflagefläche 34 der Bürste 22 ist dem Radius der Kontaktbahn 28 angepasst um einem zu übertragenden Strom eine möglichst große Übergangsfläche bereitzustellen.

FIG 6 zeigt in einer weiteren perspektivischen Darstellung die Bürstenaufnahme 13 mit zwei parallelen Aufnahmeschächten 25 mit ihren Führungselementen 17. Ebenfalls ist die Nut 23 zu sehen, über die die Meldelasche zum Haken 30 der Verschleißüberwachung 14 geführt wird. Die vorliegende Bürstenaufnahme mit zwei parallelen Aufnahmeschächten 25 kann ebenso je nach Anwendungsfall und zu übertragender Stromstärke auch mit drei oder vier parallelen Aufnahmeschächten ausgeführt sein.

Ebenso kann jedes Trägersegment 11, das für eine elektrische Phase vorgesehen ist, mehrere in Umfangsrichtung betrachtet hintereinander angeordnete Bürstenaufnahmen aufweisen, so dass sich die gesamt zu übertragende Leistung auf mehrere Kontaktstellen 28 verteilt.

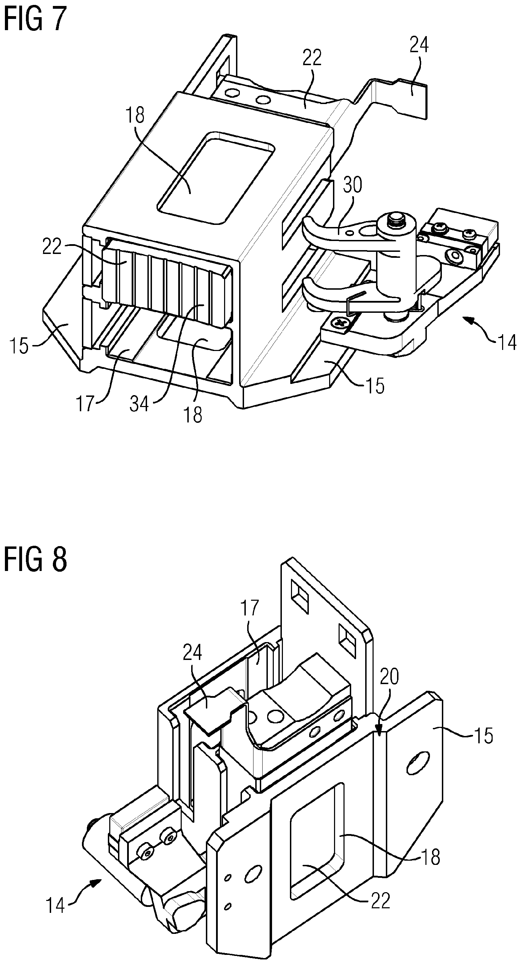

FIG 7 zeigt eine Bürstenaufnahme 13, in der in einem Aufnahmeschacht 25 eine Bürste 22 vorgesehen ist, die an ihrem radial oberen Ende die angebrachte Meldelasche 24 aufweist. Ebenso ist die Lasche 15 der Bürstenaufnahme 13 zu sehen, an die beispielsweise die Verschleißüberwachung 14 angebracht sein kann. Die Auflagefläche 34 der Bürste 22 ist geriffelt ausgeführt um den Stromtransport zu verbessern.

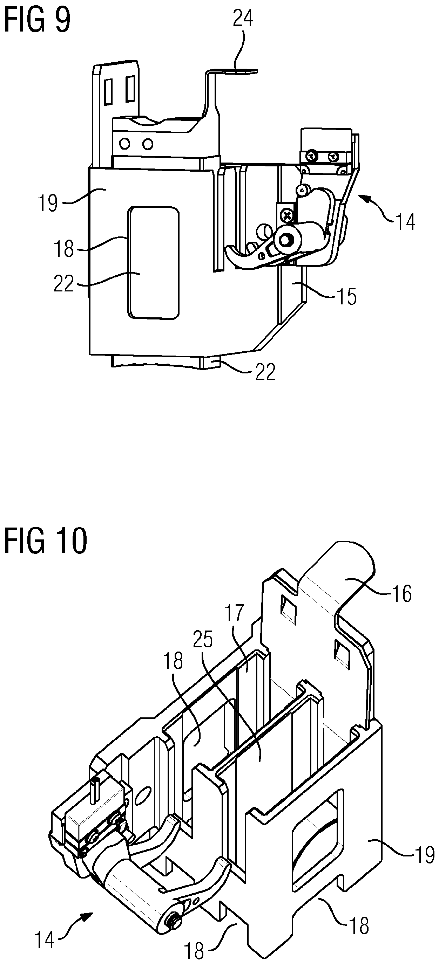

Ebenso zeigen FIG 8 und 9 weitere perspektivische Darstellungen der eben genannten Ausführung.

FIG 10 zeigt in einer weiteren Ausführung eine zusätzliche Optimierung der Kühlung einer Bürstenaufnahme 13 dahingehend, dass nahezu jede Wandung 19 Kühlöffnungen 18 aufweist, ohne die mechanische Stabilität der gesamten Bürstenaufnahme 13 zu gefährden. In dieser Darstellung ist auch der Federstempel 16 gezeigt, durch den die Bürsten 22 in beiden parallelen Aufnahmeschächten über eine Lasche mit einer radialen Kraft beaufschlagbar sind.

Bei der Fortführung des erfinderischen Gedankens sind letztlich lediglich nur noch Führungselemente 17 vorhanden, die innerhalb eines Haltegerüstes angeordnet sind, das den Aufnahmeschacht 25 oder die Aufnahmeschächte 25 bildet. Die Bürstenaufnahme 13 ist letztlich nunmehr ein Haltegerüst, das mittels Führungselementen 17 die Bürsten 22 jeweils in ihrem Aufnahmeschacht 25 hält bzw. führt und soweit vorgesehen Nuten 23 zum Eingriff der Verschleißüberwachung 14 aufweist. Entscheidend ist nunmehr, dass an der Bürstenaufnahme 13 möglichst viele "Freiflächen", also Öffnungen 18 vorgesehen sind, um eine ausreichende Kühlung der Bürsten 22 zu gewährleisten.

Die Führungselemente 17 gewährleisten in jeder Ausführungsform einen reibungsoptimierten radialen Transport der Bürste 22 innerhalb ihres Aufnahmeschachtes 25, ohne ein Verkanten innerhalb des Haltegerüstes bzw. Aufnahmeschachtes 25.

Die Aufnahmeschächte 25 der Bürstenaufnahme 13 sind entweder einstückig ausgebildet oder mit zumindest einer separaten Wandung versehen, die in Aufnahmeschlitze der Bürstenaufnahme 13 einsetzbar ist.

Die Anwendung einer derartigen kontaktierenden Drehübertragung, insbesondere Schleifringeinheit 6 ist vor allem bei Windkraftgeneratoren vorgesehen.

## Patentansprüche

1. Kontaktierende Drehübertragung zur Übertragung von elektrischer Energie zwischen wenigstens zwei gegeneinander beweglichen Einheiten, insbesondere Schleifringeinheit (6) für Windkraftgeneratoren mit zumindest einer Anordnung zur Führung und/oder Halterung von Bürsten (22) als elektrisch leitfähige Schleifkontaktelemente, mit wenigstens einer entlang einer Bahnbewegung verlaufenden Kontaktbahn (28) aus elektrisch leitfähigem Material und zumindest einer Bürstenaufnahme (13) mit zumindest einem stationären Aufnahmeschacht (25) mit einer darin angeordneten Bürste (22), der jeweils durch Wandungen (19) gebildet ist, wobei zumindest eine Wandung (19) Führungselemente (17) aufweist, die derart gestaltet sind, dass sich zwischen Schleifkontaktelement und Wandungen (19) des jeweiligen Aufnahmeschachtes (25) Spalten (21) einstellen, wobei zumindest eine Wandung (19) zumindest eine Öffnung (18) aufweist, derart, dass dadurch das Schleifkontaktelement im Aufnahmeschacht (25) kühlbar ist, **dadurch gekennzeichnet, dass** mehrere axial hintereinander angeordnete Trägersegmente (11), mit jeweils einer oder mehreren Bürstenaufnahmen (13) vorgesehen sind, wobei jeweils zwischen Trägersegment (11) und Bürstenaufnahme (13) ein durchgehender Spalt (20) vorgesehen ist, welcher es einem radialen Kühlluftstrom ermöglicht, ebenfalls über zumindest eine der genannten Öffnungen (18) eine Bürste (22) zu kühlen.

2. Kontaktierende Drehübertragung nach Anspruch 1, **dadurch gekennzeichnet, dass** die Führungselemente (17) als Leisten an zumindest zwei gegenüberliegenden Ecken eines Aufnahmeschachtes (25) angeordnet sind.

3. Kontaktierende Drehübertragung nach Anspruch 1 oder 2, **dadurch gekennzeichnet, dass** Mittel zur Verschleißermittlung einer Bürste (22) als elektrisch leitfähiges Schleifkontaktelement vorgesehen sind.

4. Kontaktierende Drehübertragung nach einem der vorhergehenden Ansprüche, **dadurch gekennzeichnet, dass** pro Aufnahmeschacht (25) Anpresselemente an die Bürsten (22) als elektrisch leitfähige Schleifkontaktelemente vorgesehen sind, um einen ausreichenden Kontaktdruck zwischen Schleifkontaktelement und Kontaktbahn (28) zu erhalten.

5. Dynamoelektrische Maschine (1) mit zumindest einer kontaktierenden Drehübertragung, insbesondere Schleifringeinheit (6) nach einem der vorhergehenden Ansprüche, wobei ein axialer und/oder radialer Kühlluftstrom im Bauraum der kontaktierenden Drehübertragung vorgesehen ist, der die Bürsten (22) als elektrisch leitfähige Schleifkontaktelemente kühlt.

6. Dynamoelektrische Maschine (1) nach Anspruch 5, **dadurch gekennzeichnet , dass** sich die kontaktierende Drehübertragung axial an einen Rotor (3) der dynamoelektrischen Maschine (1) anschließt.

7. Dynamoelektrische Maschine (1) nach Anspruch 6, **dadurch gekennzeichnet, dass** die kontaktierende Drehübertragung bezüglich des Rotors (3) koaxial angeordnet ist.

## Claims

1. Contact-making rotary transmission for transmitting electrical energy between at least two units which can be moved with respect to one another, in particular sliding ring unit (6) for wind power generators having at least one arrangement for guiding and/or holding brushes (22) as electrically conductive sliding contact elements, having at least one contact path (28), which runs along a path movement and is composed of electrically conductive material, and at least one brush receptacle (13) with at least one stationary receiving shaft (25) with a brush (22) arranged therein, which is formed by walls (19) in each case, wherein at least one wall (19) has guide elements (17) which are designed in such a way that gaps (21) form between sliding contact element and walls (19) of the respective receiving shaft (25), wherein at least one wall (19) has at least one opening (18) in such a way that the sliding contact element in the receiving shaft (25) can be cooled in this way, **characterised in that** a plurality of carrier segments (11), which are arranged axially one behind the other, are provided with in each case one or more brush receptacles (13), wherein a continuous gap (20) is provided between carrier segment (11) and brush receptacle (13) in each case, which enables a radial cooling air flow likewise to cool a brush (22) via at least one of the cited openings (18).

2. Contact-making rotary transmission according to claim 1, **characterised in that** the guide elements (17) are arranged as strips on at least two opposing corners of a receiving shaft (25) .

3. Contact-making rotary transmission according to claim 1 or 2, **characterised in that** means for determining the wear of a brush (22) as an electrically conductive sliding contact element are provided.

4. Contact-making rotary transmission according to one of the preceding claims, **characterised in that** per receiving shaft (25), pressure elements are provided on the brushes as electrically conductive sliding contact elements, in order to maintain adequate contact pressure between the sliding contact element and contact path (28).

5. Dynamoelectric machine (1) having at least one contact-making rotary transmission, in particular sliding ring unit (6) according to one of the preceding claims, wherein an axial and/or radial flow of cooling air is provided in the installation space of the contact-making rotary transmission, which cools the brushes (22) as electrically conductive sliding contact elements.

6. Dynamoelectric machine (1) according to claim 5, **characterised in that** the contact-making rotary transmission connects axially to a rotor (3) of the dynamoelectric machine (1) .

7. Dynamoelectric machine (1) according to claim 6, **characterised in that** the contact-making rotary transmission is arranged coaxially with respect to the rotor (3).

## Revendications

1. Transmission rotative formant contact pour transmettre de l'énergie électrique entre au moins deux unités mobiles l'une par rapport à l'autre, notamment une unité (6) à bague collectrice pour des génératrices d'éolienne, comprenant au moins un système de guidage et/ou de maintien de balais (22) comme éléments de contact glissant conducteurs de l'électricité, comprenant au moins une piste (28) de contact en un matériau conducteur de l'électricité, s'étendant suivant une orbite, et au moins un logement (13) de balai ayant au moins un puits (25) fixe de réception d'un balai (22), qui y est mis, puis qui est formé respectivement par des parois (19), au moins une paroi (19) ayant des éléments (17) de guidage conformés de manière à régler des intervalles (21) entre l'élément de contact glissant et des parois (19) du puits (25) de réception respectif, au moins une paroi (19) ayant au moins une ouverture (18), de manière à ce qu'ainsi l'élément de contact glissant dans le puits (15) de réception puisse être refroidi, **caractérisée en ce qu'**il est prévu plusieurs segments (11) de support disposés axialement les uns derrière les autres et ayant chacun un ou plusieurs logements (13) de balai, dans laquelle respectivement, entre un segment (11) de support et un logement (13) de balai, est prévu un intervalle (20) continu, qui rend possible un courant radial d'air de refroidissement pour refroidir un balai (22) également par au moins l'une desdites ouvertures (18).

2. Transmission rotative faisant contact suivant la revendication 1, **caractérisée en ce que** les éléments (17) de guidage sont disposés sous la forme de réglettes sur au moins deux coins opposés d'un puits (25) de réception.

3. Transmission rotative faisant contact suivant la revendication 1 ou 2, **caractérisée en ce qu'**il est prévu des moyens de détermination de l'usure d'un balai (22) sous la forme d'un élément de contact glissant conducteur de l'électricité.

4. Transmission rotative faisant contact suivant l'une des revendications précédentes, **caractérisée en ce qu'**il est prévu, par puits (25) de réception, des éléments de pression sur les balais (22) sous la forme d'éléments de contact glissant conducteurs de l'électricité, afin d'obtenir une pression de contact suffisante entre l'élément de contact glissant et la piste (28) de contact.

5. Machine (1) dynamoélectrique comprenant au moins une transmission rotative faisant contact, notamment une unité (6) à bague collectrice, suivant l'une des revendications précédentes, un courant d'air de refroidissement axial et/ou radial étant prévu dans l'espace de montage de la transmission rotative faisant contact, courant qui refroidit des balais (22) sous la forme d'éléments de contact glissant conducteurs de l'électricité.

6. Machine (1) dynamoélectrique suivant la revendication 5, **caractérisée en ce que** la transmission rotative faisant contact se raccorde axialement à un rotor (3) de la machine (1) dynamoélectrique.

7. Machine (1) dynamoélectrique suivant la revendication 6, **caractérisée en ce que** la transmission rotative faisant contact est disposée coaxialement par rapport au rotor (3).
